# NEUE EUROPÄISCHE PATENTSCHRIFT

(11) **EP 0 166 033 B2**
(45) Veröffentlichungstag und Bekanntmachung des Hinweises auf die Entscheidung über den Einspruch: **31.03.1993**
(45) Hinweis auf die Patenterteilung: 25.04.1990
(21) Anmeldenummer: 84116234.0
(22) Anmeldetag: 22.12.1984
(51) Int. Cl.: F02P 5/04

(54) **Vorrichtung zur Klopfregelung von Brennkraftmaschinen**
Apparatus for controlling the knocking of an internal-combustion engine
Dispositif de régulation du cliquetis d'un moteur à combustion interne

(30) Priorität: 26.05.1984 DE 3419727
(43) Veröffentlichungstag der Anmeldung: 02.01.1986
(73) Patentinhaber: ROBERT BOSCH GMBH, 70442 Stuttgart (DE)
(72) Erfinder: Bonitz, Jörg, Dipl.-Ing., D-7130 Mühlacker 6 (DE); Entenmann, Robert, Ing., D-7141 Benningen (DE); Miller, Bernhard, D-7000 Stuttgart 1 (DE); Rauch, Hans, Dr., Dipl.-Ing., D-8510 Fürth (DE); Rohde, S., Dr., Dipl.-Ing., D-7141 Schwieberdingen (DE); Unland, Stefan, Dipl.-Ing., D-7140 Ludwigsburg (DE); Viess, Walter, Dipl.-Ing., D-7141 Schwieberdingen (DE)

(56) Entgegenhaltungen:
- DE-A- 2 930 540
- DE-A- 3 116 593
- US-A- 4 328 779
- PATENTS ABSTRACTS OF JAPAN, Band 6, Nr. 101 (M-135)[979], 10. Juni 1982; & JP - A - 57 35158
- PATENTS ABSTRACTS OF JAPAN, Band 7, Nr. 44 (M-195)[1189], 22. Februar 1983; & JP - A - 57 193771

## Beschreibung

### Stand der Technik

Die Erfindung geht aus von einer Vorrichtung zur Klopfregelung von Brennkraftmaschinen nach der Gattung des Hauptanspruches.

Aus der DE-OS 30 22 427 ist bereits eine Steuervorrichtung für die Kraftstoff-Luft-Gemischaufbereitung in Brennkraftmaschinen bekannt, bei der zur Verhinderung des Klopfens als Stellgröße eine Gemischanfettung und/oder eine Zündzeitpunktspätverstellung für den Motor vorgenommen wird. Diese Maßnahmen erfolgen dabei anhand von Kennlinien oder anhand von Kennfeldern, insbesondere in Abhängigkeit der Temperatur und verschiedener Motorparameter wie Drehzahl oder Last. Die Kennlinien und Kennfelder sind so ausgelegt, daß ein Betriebszustand der Brennkraftmaschine im DrehmomentoderAbgasoptimum (Lambda-Regelung) oderzumindest möglichst nahe der Klopfgrenze erreicht wird. Sie werden vom Motorhersteller geliefert und sind unter Laborbedingungen aufgenommen worden. Bei Verschleiß der Motorteile, Alterung der Materialien, Verstellung von Ventilen, verschiedener Kraftstoffqualität, unter Einfluß von Luftdruck und Luftfeuchtigkeit etc. sind diese gelieferten Kennlinien nicht ideal.

Aus der DE-A 3 116 593 ist ein Verfahren zur Klopfregelung von Brennkraftmaschinen mit einem Rechner bekannt, bei dem neben einem Kennfeldspeicher ein weiterer Speichervorgesehen ist, in dem bei einer Klopfmeldung korrigierte Zündwinkelwerte eingespeichert sind. Vor der Auslösung eines Zündfunkens wird nun geprüft, ob bei einem speziellen Arbeitspunkt im Korrekturkennfeld ein anderer Zündwinkel gespeichert ist, und gegebenenfalls der dort abgelegte Zündwinkelwert für den Betrieb der Brennkraftmaschine genützt, so daß Klopfen vermieden wird. Aus der DE-A 2 930 540 ist ein Verfahren zur Verhinderung des Auftretens von unerwünschten Klopfens beim Betrieb einer Brennkraftmaschine bekannt, bei der Korrektursignale für eine spezielle Zündungskennlinie aufgenommen werden und gespeichert werden, wobei die Korrektursignale solange verändert werden, bis ein Klopfen nicht mehr auftritt. Diese Korrektursignale werden bei jedem Inbetriebnehmen der Brennkraftmaschine vom neuen gewonnen und sollen bewirken, daß die Brennkraftmaschine nach einem gewissen Fahrbetrieb in einem Bereich betrieben wird, in dem Klopfen nicht mehr auftreten kann.

Aus der US-PS 4,328,779 ist ein Zündsteuersystem für Brennkraftmaschinen bekannt geworden, bei dem beim Auftreten von Klopfen die Zündung nach spät und bei fehlendem Klopfen die Zündung nach früh verstellt wird. Um wiederholtes Klopfen in der Brennkraftmaschine zu verhindern, werden in einem getrennten Speicher Korrekturverstellwinkel abgespeichert, bei denen bei einem vorherigen Fahrfall kein Klopfen aufgetreten ist. Tritt nun dieser Fahrfall wieder auf, so wird ein Zündwinkel ausgegeben, der sich aus einem Basiszündwinkel und dem Korrekturzündwinkel zusammensetzt. Dadurch wird ein wiederholtes Klopfen in diesem Betriebszustand vermieden.

Die vorliegende Erfindung hat den Zweck, Fehler in der Brennkraftmaschine oder der Auswertelektronikauch bei d ieser Art von Klopfregelung sicher zu erkennen.

### Vorteile der Erfindung

Die erfindungsgemäße Vorrichtung zur Klopfregelung mit den kennzeichnenden Merkmalen des Hauptanspruchs hat den Vorteil, daß verhindert wird, daß ein gravierender Fehler in der Brennkraftmaschine unbemerkt bleibt. Überschreitet nämlich der Inhalt des Differenzkennfeldes vorgegebene Grenzen, so ist davon auszugehen, daß Schäden bei der Brennkraftmaschine vorliegen, die behoben werden müssen, da ein Klopfen ab einer bestimmten Veränderung üblicherweise auch unter kritischen Betriebsbedingungen nicht auftritt. Da dann unter Umständen auch ein Fehler in der Auswertelektronik vorliegen kann, werden beim Auftreten von ungewöhnlichen Werten im Differenzkennfeld in das Differenzkennfeld Werte eingelesen, die einen für alle Betriebszustände ungefährlichen Betrieb der Brennkraftmaschine gewährleisten. Es wird also ein Betrieb durchgeführt, bei dem die Brennkraftmaschine in einem sicheren Bereich betrieben wird, bei dem ein Auftreten von Klopfen nicht zu erwarten ist.

Durch die in den Unteransprüchen aufgeführten Maßnahmen sind vorteilhafte Ausführungen der erfindungsgemäßen Vorrichtung möglich. So ist es vorteilhaft die Schrittweite und/oder die Häufigkeit der Veränderung des Kennfeldes von einem Betriebsparameter, vorzugsweise der Drehzahl der Brennkraftmaschine, abhängig zu machen. Hierdurch wird erreicht, daß in bestimmten Bereichen des Betriebs der Brennkraftmaschine eine Anpassung in größeren Schritten möglich wird, weil diese Bereich die Brennkraftmaschine besonders gefährden, wenn zu häufig Klopfen auftritt. Andererseits ist auch besonders vorteilhaft, eine Kennfeldänderung dann nichtvorzunehmen, wenn aufgrund einer geringen Klopfintensität oder Klopfhäufigkeit eine Gefahr für die Brennkraftmaschine nicht zur befürchten ist. Dadurch wird erreicht, daß nicht durch zufällige Störungen die Grenzen der Verstellung zufällig erreicht oder überschritten werden.

### Zeichnung

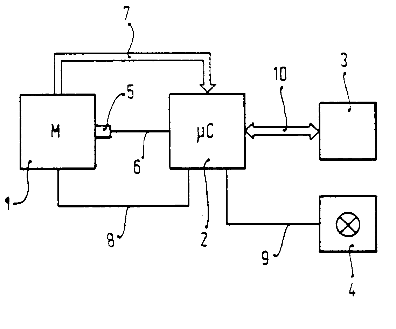

Ein Ausführungsbeispiel der Erfindung ist in der Zeichnung dargestellt und in der nachfolgenden Beschreibung näher erläutert. Die Zeichnung zeigt ein erfindungsgemäßes Klopfregelsystem in schematischer Darstellung.

### Beschreibung des Ausführungsbeispieles

Ein Motor 1 gibt über verschiedene zu einem Bus zusammengefaßte Signalleitungen Betriebsparameter 7, insbesondere Drehzahl, Last und Temperatur an einen Rechner 2. Ein Klopfsensor 5 liefert als Betriebsparameter eine Klopfmeldung 6 an den Rechner 2. Der Rechner 2 liefert seinerseits an den Motor 1 eine Stellgröße 8 zur Beeinflussung des Zündzeitpunktes. Ein Kennfeldspeicher 3 ist über einen Bus mit dem Rechner 2 verbunden, über den Kennfelddaten 10 ausgetauscht werden. Eine Fehleranzeige 4 emofängt vom Rechner 2 eine Fehlermeldung 9.

Der Rechner 2 besteht im wesentlichen aus einem Mikrocomputer und verschiedenen elektronischen Schaltungen, insbesondere zur Auswertung der Klopfmeldung 6, Empfangs- und Treiberschaltungen für den Bus der Betriebsparameter 7 und der Kennfelddaten 10. Der Rechner ist insoweit ein als Stand der Technik bekannter Rechner zur Regelung und/oder Steuerung des Motors, sowie zur Überwachung der gesamten Brennkraftmaschine oder des Fahrzeugs.

Die Art der Auswertung der Klopfmeldung 6 im Rechner 2 kann nach verschiedenen Verfahren realisiert sein, etwa gemäß dem aus der DE-OS 28 32 594 bekannten Verfahren. Bei einer Ja/Nein- Entscheidung für Klopfen kann daraufhin im Rechner 2 eine fortlaufende Veränderung des Zündzeitpunktes in Richtung Spät/Früh bei fester Schrittweite von etwa 1 ° Kurbelwelle vorgenommen werden, Bei einem Verfahren zur Klopferkennung, bei der gleichzeitig ein Maß für die Klopfintensität ermittelt wird, kann auch eine variable Schrittweite für die Zündzeitpunktverstellung ermittelt werden.

Der Kennfeldspeicher 3 besteht aus einem Speicher mit wahlweisem Zugriff (RAM), der beim Start des Motors 1 d.h, mit Einschalten der Versorgungsspannung, mit Ursprungsdaten geladen wird, einem Basiskennfeld, das in einem nichtflüchtigen Speicher (ROM) im Rechner 2 abgespeichert ist. Im Kennfeldspeicher 3 ist dann ein Kennfeld gespeichert, bei dem ein Zündwinkel über zwei Dimensionen Drehzahl und Last aufgetragen ist. Das unveränderliche Basiskennfeld wurde vom Motorhersteller im Labor ermittelt und ist dabei auf ein Betriebsoptimum ausgelegt, etwa maximaler Leistung oder minimalem Kraftstoffverbrauch. Bei kaltem Motor wird ein anderes Basiskennfeld in den Kennfeldspeicher 3 geladen als bei warmen Motor, um so den verschiedenen Betriebsbedingungen bei Kaltstart oder Warmstart Rechnung zu tragen. Aufgrund leichterer Programmierbarkeit und höherer Betriebssicherheit wird das Kennfeld additiv aus dem Basiskennfeld und einem Differenzkennfeld gebildet. Das Differenzkennfeld ist dabei allein veränderlich, so daß die im nachfolgenden beschriebenen Algorithmen allein das Differenzkennfeld beeinflussen. Selbstverständlich ist auch eine andere funktionale Verknüpfung (etwa Multiplikation) möglich, um so das eigentliche Kennfeld zu erhalten.

Während des Betriebes der Brennkraftmaschine wird das Kennfeld auf verschiedenen Kurven durchfahren, die sich je nach Arbeitspunkt Drehzahl, Last, Temperatur - ergeben. Zum jeweiligen momentanen Arbeitspunkt berechnet der Mikrocomputer 2 aus dem im Kennfeldspeicher 3 abgespeicherten Wert einen Zündzeitpunkt, dem er eine bestimmte, aus der Klopfmeldung gewonnene, Zeit zur Spätverstellung hinzuaddiert, Wird ein Klopfen vom Klopfsensor 5 gemeldet, so wird im Kennfeld der momentane Arbeitspunkt in Richtung größeren Klopfabstandes angehoben. Damit erfolgt ein Kennfeldaufbau bei Klopfen. Erfolgt längere Zeit keine Klopfmeldung, so werden die Kennfeldinhalte nach einervorgegebenen Anzahl von Verbrennungszyklen um einen Schritt in Richtung Betriebsoptimum, d.h. geringeren Klopfabstandes geändert. Der Kennfeldabbau geschieht also in Abhängigkeit der Drehzahl und geschieht schneller bei abrupten Lastwechseln und hoher Temperatur.

Da dies stattfindet, während, durch verschiedene Arbeitspunkte des Motors bedingt, verschiedene Kurven im Kennfeld des Kennfeldspeichers 3 durchfahren werden, erfolgt adaptiv eine Annäherung der Zündwinkel im Kennfeldspeicher 3 über den gesamten Betriebsbereich an das Betriebsoptimum unter Einhaltung einer minimalen Klopfgrenze. Die Klopfregelung erfolgt dabei zylinderspezifisch, d.h, bei vier Zylindern sind im Kennfeld des Kennfeldspeichers 3 vier Zündwinkel über Drehzahl und Last, aufgetragen. Durch den Inhalt des Kennfeldspeichers 3 ist somit eine Vorsteuerung für eine Klopfregelung gegeben, die sich selbsttätig zylinderspezifisch an die jeweilige Klopfgrenze adaptiv annähert. Damit ist eine hohe Dynamik des Betriebes der Brennkraftmaschine möglich, insbesondere beim Beschleunigungsvorgang wird so ein Klopfen sicher verhindert, und gleichzeitig ein Betrieb nahe dem Betriebsoptimum gewährleistet.

Treten während des Betriebes Fehler auf, so sind diese an typischen Deformierungen des Kennfeldes erkennbar. Der Rechner 2 vergleicht den Verlauf des Kennfeldes während des Betriebes laufend mit Ober-und Untergrenzen. Fällt beispielsweise ein Klopfsensor eines Zylinders etwa durch Unterbrechung der Zuleitung aus, so ist dies am Kennfeld daran erkenntlich, daß sich das Kennfeld für diesen Zylinderadaptiv zu immer früheren Zündwinkeln annähert, wie sie für den normalen Betrieb unzulässig sind. Weitere Fälle, wie etwa undicht sitzende Ventile, Verschmutzung der Zündkerze mit Öl durch undichte Kolbenringe führen zu ähnlichen typischen Kennfelddeformierungen. Der Rechner 2 erkennt dies und gibt eine Fehlermeldung 9 an die Fehleranzeige 4 ab. Je nach Komfort eines Fahrzeuges erzeugt diese einen Hinweis auf einem Borddisplay oder einfach eine optische Meldung durch Aufleuchten einer Lampe bzw. eine Erzeugung eines Summtones. Auch eine künstliche Sprachausgabe kann dadurch angeregt werden. Bei Erkennung eines Fehlers werden die Zündwinkel des gesamten Kennfeldes auf einen ungefährlichen Bereich gelegt, d.h. es wird ein Sicherheitskennfeld in den Kennfeldspeicher 3 geladen und die Klopfregelung unterbrochen, so daß ein sicherer Betrieb der Brennkraftmaschine für alle möglichen Betriebsbedingungen gewährleistet ist, Darüber hinaus wird durch die im Rechner 2 eingebaute elektronische Auswerteschaltung der Klopfmeldung 6 das Hintergrundgeräusch des Ausgangssignales des Klopfsensors 5 ermittelt. Weiterhin geschieht eine zylinderspezifische Funktionsüberwachung der zylinderspezifischen Klopfsensoren dadurch, daß für jeden Zylinder die Abweichung des über alle Zylinder gemittelten Zündwinkels ermittelt wird. Weicht diese Differenz für einen Zylinder zu stark vom Mittelwert ab, so wird ein Fehler gemeldet.

Selbstverständlich ist die Erfindung nicht auf das hier gewählte bevorzugte Ausführungsbeispiel beschränkt, Insbesondere ist von der Art der Klopfauswertung der Klopfmeldung 6 abhängig, welche Schrittweite für die Klopfregelung herangezogen wird. Weiterhin steht die Dimension und die Dichte des Kennfeldes 3 im Ermessen des Fachmannes. Ihm ist darüber hinaus bekannt, daß etwa durch Interpolation zwischen verschiedenen Kennfeldstützstellen, etwa 16 x 16 Punkten über Last und Drehzahl die Kennfelddichte fiktiv erhöht werden kann. Bis zu welchem Abstand von der Klopfgrenze der Zündwinkel über das Kennfeld 3 adaptiv vorgesteuert wird, hängt ebenfalls von den Vorgaben des Fachmannes bzw. von den jeweiligen Daten des zu regelnden Motores ab.

Weiterhin ist es möglich, das Kennfeld nach Betrieb der Brennkraftmaschine aufrechtzuerhalten, indem es in einen nicht flüchtigen Schreiblesespeicher EEPROM geladen wird. Bei Heißstart der Brennkraftmaschine kann dann dieses Kennfeld anstelle des Basiskennfeldes geladen werden, bzw. es ist möglich, über einen. Adapterstecker in einer Werkstatt den Inhalt dieses Speichers auszulesen und einem Diagnoserechner zur Motordiagnose zur Verfügung zu stellen. Die Erfindung ist weiterhin auch auf Dieselmotoren anwendbar, bei der zur Klopfverhinderung etwa der Einspritzzeitpunkt verzögert wird. Bei Brennkraftmaschinen mit Turboladern kann der Ladedruck verringert werden usw.

## Patentansprüche

1. Vorrichtung zur Klopfregelung von Brennkraftmaschinen (1) mit einem Rechner (2) und mit einem Kennfeldspeicher (3), in dem neben einem unveränderlichen Basiskennfeld ein veränderliches Kennfeld vorgesehen ist, in das bei einer Klopfmeldung (5, 6) Kennfeldwerte einlesbar sind, die zu einer Verstellung des Zündzeitpunktes zur Verringerung oder Verhinderung von Klopfen dienen, wobei aufgrund der gespeicherten Kennfeldwerte die Zündverstellung für eine Zündanlage bewirkbar ist und das veränderliche Kennfeld als ein die Änderung für das Basiskennfeld verzeichnendes Differenzkennfeld ausgebildet ist, wobei der Rechner (2) Mittel aufweist, durch welche der Wert für die Zündverstellung aus den Kennfeldwerten des Basiskennfeldes und des Differenzkennfeldes durch Addition oder Multiplikation gebildet wird und durch welche die den entsprechenden Betriebszustand der Brennkraftmaschine entsprechenden Kennfeldwerte des Differenzkennfeldes beim Auftreten von Klopfen ausgehend von einem eventuell bereits vorhandenen Inhalt schrittweise im Sinne einer Verminderung des Klopfens verändert werden und schrittweise in der entgegengesetzten Richtung verändert werden, wenn bei zumindest einer Zündung keine Klopfmeldung auftritt, dadurch gekennzeichnet, daß eine Fehlermeldung abgegeben wird, vorzugsweise durch eine Fehleranzeige (4), wenn der Inhalt des Differenzkennfeldes vorgegebene Grenzen überschreitet und daß die Fehlermeldung eine unveränderliche Kennwerteinstellung des Differenzkennfeldes bewirkt, die einen für alle Betriebszustände ungefährlichen Betrieb der Brennkraftmaschine gewährleistet.

2. Vorrichtung nach Anspruch 1, dadurch gekennzeichnet, daß die Schrittweite und/oder die Häufigkeit der Veränderung der Kennfeldwerte des Differenzkennfeldes von wenigstens einem Betriebsparameter, vorzugsweise der Drehzahl, der Brennkraftmaschine abhängt.

3. Vorrichtung nach Anspruche 1 oder 2, dadurch gekennzeichnet, daß das Differenzkennfeld unverändert bleibt, wenn die Klopfintensität oder die Klopfhäufigkeit unterhalb einer vorgegebenen Grenze bleibt.

## Claims

1. Device for controlling the knocking of internal-combustion engines (1), with a computer (2) and with a characteristic-field memory (3), in which there is, in addition to an invariable basic characteristic field, a variable characteristic field, into which it is possible, in the event of a knocking alarm (5, 6) to enter characteristic-field values serving for adjusting the ignition timing forthe reduction or prevention of knocking, the ignition adjustment for an ignition system being obtainable on the basis of the stored characteristic-field values and the variable characteristic field is designed as a differential characteristic field exhibiting the changes for the basic characteristic field, in which the computer (2) has means by which the value for the ignition adjustment is formed from the characteristic-field values of the basic characteristic field and of the differential characteristic field by addition or multiplication and by which, when knocking occurs, the characteristic-field values of the differential-characteristic field which correspond to the appropriate operating state of the internal-combustion engine are, starting from a content which possibly already exists, varied in steps in the direction of reduction of the knocking and varied in steps in the opposite direction when no knocking alarm occurs during at least one ignition, characterised in that a fault alarm is emitted, preferably by a fault indicator (4), when the content of the differential characteristic field exceeds predetermined limits, and in that the fault alarm causes an invariable characteristic-value adjustment of the differential characteristic field which guarantees that the internal-combustion engine will operate safely for all operating states.

2. Device according to Claim 1, characterised in that the step size and/or frequency of the variation of the characteristic-field values of the differential- characteristic field depend on at least one operating parameter, preferably the speed, of the internal-combustion engine.

3. Device according to Claims 1 or 2, characterised in that the differential characteristic field remains unchanged when the knocking intensity or knocking frequency remains below a predetermined limit.

## Revendications

1. Dispositif de réglage de cliquetis d'un moteur à combustion interne (1), composé d'un calculateur (2) et d'une mémoire de champ des caractéristiques (3), dans laquelle sont prévus, en plus du champ des caractéristiques de base, non modifiable, un champ des caractéristiques modifiables, mémoire dans laquelle au signalement d'un cliquetis (5-6) on peut mémoriser des valeurs du champ des caractéristiques qui servent à un réglage du point d'allumage afin de diminuer ou de supprimer les cliquetis, dans laquelle en vertu des valeurs du champ des caractéristiques mémorisées, la modification d'allumage pour l'installation d'allumage est efficace et en ce que le champ des caractéristiques modifiables en forme de champ des caractéristiques de différence qui distingue les variations du champ des caractéristiques de base, dans laquelle le calculateur (2) présente des moyens par lesquels la valeur pour le réglage de l'allumage est calculée à partir des valeurs du champ des caractéristiques de base et du champ des caractéristiques de différence par addition ou par multiplication, on modifie pas à pas dans le sens de diminution du cliquetis les valeurs du champ des caractéristiques correspondant à l'état de fonctionnement du moteur à combustion interne à l'apparition de cliquetis contenus déjà existants, ces valeurs étant modifiées pas à pas dans la direction opposée, si aucun signal de cliquetis n'apparaît au moins lors d'un allumage, caractérisé en ce qu'un signal d'erreur est donné de préférence par le biais d'un voyant d'erreur (4), lorsque le contenu du champ des caractéristiques de différence dépasse des limites prédéterminées et que le signal d'erreur suppose une valeur de réglage non modifiable du champ de différence qui assure un mode d'utilisation non dangereux pour tous les régimes.

2. Dispositif selon la revendication 1, caractérisé en ce que la longueur de pas et/ou la fréquence des modifications de valeur du champ des caractéristiques de différence, dépendent d'au moins un paramètre d'utilisation, de préférence la vitesse de rotation du moteur à combustion interne.

3. Dispositif selon les revendications 1 et 2, caractérisé en ce que le champ des caractéristiques de différence reste inchangé lorsque l'intensité du cliquetis ou la fréquence du cliquetis reste en-dessous d'une limite prédéterminée.
